# EUROPÄISCHE PATENTSCHRIFT

(11) **EP 1 062 442 B1**
(45) Veröffentlichungstag und Bekanntmachung des Hinweises auf die Patenterteilung: **24.09.2003**
(21) Anmeldenummer: 99908929.5
(22) Anmeldetag: 19.02.1999
(51) Int. Cl.: F16J 15/12

(54) **GEPRÄGTE DICHTUNGSANORDNUNG FÜR EINE FLACHE FLANSCHVERBINDUNG**
STAMPED SEALING ARRANGEMENT FOR A FLAT FLANGED JOINT
SYSTEME D'ETANCHEITE ESTAMPE DESTINE A UN RACCORD A BRIDES PLAT

(30) Priorität: 07.03.1998 DE 19809864
(43) Veröffentlichungstag der Anmeldung: 27.12.2000
(73) Patentinhaber: Jung, Alfred, 50935 Köln (DE)
(72) Erfinder: Jung, Alfred, 50935 Köln (DE)
(74) Vertreter: Werner, Hans-Karsten, Dr.Dipl.-Chem.
(86) Internationale Anmeldenummer: EP9901080
(87) Internationale Veröffentlichungsnummer: WO99045298

(56) Entgegenhaltungen:
- EP-A- 0 268 134
- DE-A- 4 139 453
- DE-C- 970 950
- US-A- 5 421 594

## Beschreibung

Gegenstand der vorliegenden Erfindung ist eine Dichtungsanordnung für eine flache Flanschverbindung mit einem vorzugsweise metallischem Grundkörper, der auf jeder seiner beiden Seiten Aufnahmeflächen für ringförmige Weichstoffauflagen aufweist, wobei die Aufnahmeflächen in einem großen Bereich eben sind und im wesentlichen unmittelbar einander gegenüberliegen, mit mindestens je einem Ringzahn im radial innenliegenden Bereich jeder Aufnahmefläche und-vorzugsweise auch mindestens je einem Ringzahn im radial außenliegenden Bereich der Aufnahmeflächen, wobei die Weichstoffauflagen jeweils auf den Aufnahmefiächen befestigt sind und wobei im eingebauten Zustand die Ringzähne an den Flanschflächen zur Anlage kommen und die Weichstoffauflagen zumindest nach innen durch die Ringzähne begrenzt sind. Eine gattungsgemäße Dichtungsanordnung geht aus dem DE 295 04 402 U 1 hervor. Die beiden Aufnahmeflächen sind in einem weiten Bereich eben und liegen einander gegenüber. Im radial außenliegenden Bereich jeder Aufnahmefläche befindet sich ein äußerer Ringzahn, im radial innenliegenden Bereich ein innerer Ringzahn. Auf die Aufnahmeflächen sind Weichstoffauflagen aufgeklebt, die üblicherweise aus Graphit bestehen. In eingebautem Zustand sind die Weichstoffauflagen zwischen den Ringzähnen, den Flanschen und den Aufnahmeflächen des Grundkörpers eingebettet. Infolge dieser Kapselung kann eine Weichstoffiauflage nicht über die Ringzähne hinwegkriechen. Bei der bekannten Dichtungsanordnung werden die Ringzähne durch Drehen oder Prägen hergestellt, d.h. jeder Zahn besteht massiv aus dem Material des Grundkörpers. Diese Art der Herstellung durch Drehen oder Prägen ist sehr materialintensiv und arbeitsintensiv und daher relativ teuer. Außerdem läßt sich ab einem bestimmten Durchmesser der gestanzte Rohling nicht mehr zu einer gekapselten Dichtung prägen, so dass ein zu massiver Außen- und Innenzahn entsteht. Die Stanze ist dann auch nicht in der Lage, die nötige Kraft aufzubringen, so dass der Rohling derart verformt, da ein zu massiver Außen- und Innenzahn entsteht.

Die EP-A-268 134 beschreibt eine Zylinderkopfdichtung, bei der das Metallblech U-förmig aufgebogen ist und darüber hinaus vorzugsweise daran anschließend wellenförmige Prägungen vorhanden sind. Eine weitere nicht beanspruchte Ausführungsform zeigt einen metallischen Grundkörper mit durch Stauchen gebildeter Verdickung. Hierdurch soll erreicht werden, dass die die Wellenberg bedeckenden Graphitschichten an diesen Wellen besonders stark komprimiert werden und darüber hinaus zum Brennraum eine rein metallische Dichtung erfolgt. Diese Art von Zylinderkopfdichtung hat sich in der Praxis nicht bewährt, da bereits die Herstellung dieser metallischen Grundkörper außerordentlich schwierig und aufwendig ist. Weiterhin findet nur im Bereich der wellenförmigen Prägung nach innen hin eine Kompression der Graphitschichten statt. Diese Zylinderkopfdichtung ist eine Kraftnebenschlussdichtung, d. h. eine Dichtung, bei der nahezu die .gesamte Kraft zu einem Kontakt Metall auf Metall führt. An diesen Kontaktstellen wird die Weichstoffauflage, zerstört. Im inneren Bereich der Dichtung wird die Weichstoffauflage hingegen nicht ausreichend verdichtet.

Es ist ferner die sogenannte Wellringdichtung bekannt, die ebenfalls einen metallischen Grundkörper mit beidseitigen Weichstoffauflagen aufweist. Bei dieser Anordnung ist der Grundkörper über seine gesamte Breite wellenförmig. Damit sind aber auch die Aufnahmeflächen des Grundkörpers für die Weichstoffaufiagen wellenförmig. Der Grundkörper kommt in eingebautem Zustand nicht mit dem Flansch in Berührung, so daß keine Kapselung der Weichstoffauflagen stattfindet. Bei einer weiteren im Markt befindlichen Dichtungsanordnung hat der Grundkörper ebenfalls auf seinen beiden Seiten Aufnahmeflächen für ringförmige Weichstoffauflagen. Dabei ist der Grundkörper über seine gesamte Breite mäanderförmig ausgebildet, so daß man nicht von Ringzähnen sprechen kann. Der Grundkörper liegt dabei an mehreren relativ breiten Stellen an den Flanschen an und dazwischen befinden sich die auf diese Weise ebenfalls gekammerten Weichstoffauflagen. Diese sind aber nicht einander gegenüberliegend, sondern radial nebeneinanderliegend. Daher sind diese Dichtungsanordnungen relativ breit und zeigen oft Spaltkorrosion aufgrund der breiten metallischen Prägeflächen, die mit dem Flansch in Berührung kommen. Dies führt dann zu allmählicher Undichtigkeit der Flanschverbindung. Außerdem haben all diese Dichtungen den großen Nachteil, daß sie praktisch keine Federcharakteristik aufweisen.

Ein weiterer Stand der Technik sind sogenannte metallarmierte Dichtungen aus einem metallischen Grundkörper und beidseitig aufgebrachten Weichstoffauflagen wie.Graphit. Diese Metall-Graphitdichtungen gehören zu den sogenannten Spießblech,-Klettblechdichtungen mit einem meistens genadelten Stahlring mit beidseitig aufgebrachter Graphitauflage oder einem ähnlichen Weichstoff, welcher jedoch noch verdichtet werden muss. Diese Weichstoffiauflagen können je nach Einsatzfall schon eine Vorverdichtung aufweisen, die von der vorgesehenen Druckstufe abhängig gemacht wird. Im Einbauzustand werden die Weichstoffauflagen durch die aufgebrachte Schraubenkraft bis zum maximal möglichen Zustand weiterverdichtet. Je höher somit die Weichstoffauflagen verdichtet werden, umso besser ist der Leckratenwert. Bei diesen Spießblech,- Klettblech,- oder Aramidfaserdichtungen beispielsweise nach DIN 2690 für DIN-Flansche bzw. auch ANSI-Flansche reicht der abzudichtende Bereich vom Flanschabsatz bis kurz vor den Schraubenlöchem der Zentrierschraube.

Da die Flanschabdichtleisten bei DIN- und ANSI-Flanschen sehr breit sind, verteilt sich die aufgebrachte Schraubenkraft auf die sehr breite Dichtleiste der Flansche und somit die gesamte Abdichtbreite der Dichtung. Je kleiner jedoch die Abdichtfläche der Dichtung ist, desto höher ist bei gleicher Schraubenkraft die aufgebrachte Flächenpressung. Aufgrund dessen sind Dichtungshersteller bemüht, die Dichtbreite bzw. Dichtfläche der Dichtung zu verkleinern.

Bei sogenannten Kammprofil- oder Spiraldichtungen ist dieses ohne weiteres möglich. Bei Spießblech-, Klettblech- oder anderen Weichstoffdichtungen ist dies nicht möglich, da diese aus Dichtungsptatten ausgestanzt werden. Um auch bei diesen ausgestanzten Dichtungen die Dichtbäche zu verkleinern, sind einige Hersteller dazu übergegangen, das Graphit einer gestanzten Dichtung z.B. nach DIN 2690 vom Außenrand der Dichtung bis zum mittleren Durchmesser der Dichtung vorzuverdichten. Diese Vorverdichtung erfolgt durch Aufbringen einer Kraft, beispielsweise mit Hilfe einer großen Presse. Diese Dichtungen sind dann zwar vorverdichtet vom Außenrand bis zur Mitte. Sie weisen jedoch auch den Nachteil auf, daß die Dichtung im Einbauzustand durch das Aufbringen der Schraubenkraft vom Innenrand der Dichtung bis zur bereits vorverdichteten Mitte nachverdichtet wird. Das Graphit ist somit letztendlich wieder für den gesamten Bereich mehr oder weniger gleichmaßig verdichtet. Der große Nachteil dieser Vorgehensweise besteht darin, daß die aufgebrachte Schraubenkraft sich nicht wie gewünscht auf einen schmalen Abdichtungsbereich erstreckt sondern über die gesamte Abdichtfläche der Dichtung. Die Dichte der Weichstoffauflage ist somit nach dem Einbau bzw. im Einbauzustand wieder über den gesamten Bereich nahezu gleich.

Aufgabe der vorliegenden Erfindung ist, eine Dichtungsanordnung für eine flache Flanschverbindung zu schaffen, die bei mindestens gleichem Leckwertverhalten, gleicher Ausblassicherheit und gleicher Bauteilsicherheit wie bei den Dichtungen nach dem Stand der Technik, kostengünstiger hergestellt werden kann. Gleichzeitig soll nach Möglichkeit die Einbauhöhe verringert werden und die Dichtbreite relativ gering sein. Diese Aufgaben werden gelöst durch die Dichtungsanordnung gemäß Anspruch 1.

Vorzugsweise. soll die Dichtung weiterhin so beschaffen sein, daß die Weichstoffaufiagen im eingebauten Zustand auf jeder Seite vom Innendurchmesser aus bis zu einem gewissen äußeren Bereich hin eine höhere Dichte aufweisen. Diese Dichtung hat dann bei gleicher Stärke bzw. gleicher Dicke innen eine höhere Verdichtung zum Medium hin und zur Atmosphäre hin nach außen eine wesentlich geringere Verdichtung. Durch die höhere Verdichtung innen erzielt man im inneren Teilbereich eine wesentlich höhere Flächenpressung. Dagegen wird der Außenrand der Dichtung kaum verdichtet. Dieses reicht aber aus um die Flanschdichtleiste so abzuschirmen, dass von der Atmosphärenseite her die Flansche nicht korrodieren können. Der große Vorteil besteht darin, daß die Flansche nicht durch Korrosion leiden und beim Wiedereinbau nicht nachbearbeitet werden müssen. Die Instandhaltungskosten können somit um ein Vielfaches gesenkt werden. Die erfindungsgemäßen Dichtungsanordnungen werden insbesondere in der Form ausgebildet, dass die Weichstoffauflage auf dem metallischen Grundkörper so berechnet ist, dass sie im eingebauten Zustand nahezu maximal verdichtet ist, wobei die geprägten Innenzähne und die gegebenenfalls vorhandenen Außenzähne eine Federcharakteristik aufweisen. Die Federcharakteristik ist so gewählt, dass sich nach dem Ausbau der Dichtung aus dem Flansch die Zahnhöhen in den Zustand wie vor dem Einbau rückentspannen können und damit die ursprüngliche Zahnhöhe zurückerlangt wird.

Dadurch, dass die Wandung des Grundkörpers eine relativ geringe Dicke von 0,2 bis 2 mm; vorzugsweise 0,3 bis 1,5 mm aufweist und dadurch, dass die Ringzähne eine im Querschnitt winkelförmig oder wellenförmig verlaufende Wandung bilden, sind die Zähne nicht mehr massiv. Dies bedeutet nicht nur eine Materialersparnis. Es ist dadurch auch möglich, die Ringzähne mit relativ geringen Drücken durch Prägen herzustellen und dies auch bei Dichtungsanordnungen mit relativ großen Nenndurchmessern. Gerade bei großen Nenndurchmessern wäre aber das Herstellen der mit massiven Ringzähnen versehenen Dichtungsanordnungen mit so großem Drücken verbunden, dass in der Praxis die Zähne nur noch durch Drehen hergestellt werden konnten. Dies ist aber verbunden mit langen Hersteliungszeiten und großem Materialaufwand, wodurch derartige große Dichtungen sehr verteuert werden.

Dadurch, dass erfindungsgemäß die Aufnahmeflächen im wesentlichen unmittelbar gegenüberliegend angeordnet sind, wird erreicht, dass die ringförmige Dichtungsanordnung und damit auch die Dichtungsfläche klein gehalten werden können. Wegen der geringen Breite des maximal verdichteten Teils der Weichdichtauflage erhält man bei gleicher Anzugskraft der Flanschschrauben eine höhere Flächenpressung als bei einer breiteren Dichtungsanordnung. Dies führt zu einer größeren Dichtheit und somit auch zu besseren Leckwertraten.

Das relativ dünne Material des Grundkörpers führt darüber hinaus zu einer geringeren Einbauhöhe als bei herkömmlichen metallischen Dichtungen. Gleichzeitig führt es dazu, dass der metallische Grundkörper eine gute Federcharakteristik aufweisen kann. Die Zahnhöhe, das ist der Abstand der Zahnspitze von der Ebene der Aufnahmefläche des Grundkörpers, ist abgestimmt auf das Material der Weichstoffauflage und deren Zusammenpressbarkeit. So wird gewährleistet, dass im eingebauten Zustand die Weichstoffauflage in ihrer Dicke so weit zusammengepresst wird, dass einerseits die Ringzähne eine optimale metallische Abdichtung ergeben und andererseits durch die Federcharakteristik gewährleistet ist, dass die Flansche außerhalb der Toleranzen der Rautiefen nicht beschädigt werden.

Vorzugsweise ist der Abstand der oberen Zahnspitzen von der oberen Aufnahmefläche ebenso groß wie der Abstand der unteren Zahnspitzen von der unteren Aufnahmefläche. Dies bedeutet, dass im eingebauten Zustand der Grundkörper im Bereich der Aufnahmeflächen in der Mitte der beiden Flanschflächen zu liegen kommt. Somit werden auch vergleichbar gute Dichtungswerte auf beiden Seiten des Grundkörpers erreicht.

Um die Festigkeit und die Dichtheit im inneren Bereich der Aufnahmeflächen des Grundkörpers, d.h. in dem dem strömenden Medium zugewandten Bereich, zu erhöhen, empfiehlt es sich, die Wandung dort derart verlaufen zu lassen, dass sich mehrere Berührungspunkte mit den Flanschflächen ergeben, so sorgen die den Aufnahmeflächen benachbarten Berührungspunkte für eine weitere metallische Dichtung und gewährleisten darüber hinaus eine gute Kammerung bzw. Kapselung der Weichstoffauflagen. Diese zusätzlichen Berührungspunkte ergeben gleichzeitig eine höhere Festigkeit in diesen Bereichen, wodurch sich auch die Zuverlässigkeit erhöht.

Die erfindungsgemäßen Dichtungsanordnungen sind sowohl für Rohrleitungsflansche als auch für Apparate, Kompressoren, Motoren und Armaturen einsetzbar. Bei Rohrleitungsflanschen wird die Dichtungsanordnung vorzugsweise mit einem äußeren Zentrierring versehen. Dieser weist im allgemeinen einen Außendurchmesser auf, der geringfügig geringer ist als der gedachte Kreis, der die Flanschschrauben innen berühren würde. Beim Einbau reicht der Zentrierring somit bis in die Nähe der inneren Begrenzung der Schrauben, wodurch sich auch die Dichtungsanordnung zentriert.

Vorzugsweise weist dieser Zentrierring an seinem Außenumfang eine kleine Bördelung auf. Diese verhindert, daß der Zentrierring in die Gewindegänge der Schrauben gelangt und diese beim Drehen der Schrauben an ihrem Außenumfang beschädigt. Um derartige Beschädigungen zu vermeiden, sind nach dem Stand der Technik auch Dichtungen hergestellt worden,-deren Graphitauflage bis an den äußeren Rand des Grundkörpers reichte, d.h. auch im Bereich des Zentrierringes. Dies ist eine unnötige Verteuerung und Vergeudung von Weichdichtauflage. Dennoch hat diese Bauweise nicht immer verhindern können, dass die Zentrierringe in die Gewindegänge der Schrauben gelangt sind.

In den Fällen, in denen die Dichtungsanordnungen nur bei niedrigen Temperaturen zum Einsatz kommt und daher die Atmosphäre nicht in der Lage ist, die Weichdichtstoffauflage anzugreifen, kann auf die Ringzähne im äußeren Bereich verzichtet werden. In Anwendungsfällen bei höheren Temperaturen, bei denen die Außenatmosphäre die Weichstoffauflage angreifen könnte, sind hingegen auch Ringzähne im Außenbereich nötig, so dass die Weichdichtstoffauflage insgesamt gekammert ist und sowohl innen wie außen gegen Angriffe geschützt ist.

Um Korrosionen der Flanschflächen im Außenbereich zu vermeiden, kann es empfehlenswert sein, Material der Weichstoffauflage auch im äußeren Bereich vorzusehen. In diesem Bereich sollte aber auf die starke Verdichtung verzichtet werden, um den Anpressdruck im inneren Bereich hochzuhalten. In dem äußeren Bereich dient die Weichstoffauflage somit nur dem Korrosionsschutz der Flanschflächen.

Derartig unterschiedliche Teilbereiche der Weichstoffauflage sind beispielsweise erhältlich, in dem entweder gestanzte Weichstoffauflagen bei gleichbleibender Dicke über die gesamte Breite der Dichtung vom Innen- zum Außendurchmesser eine abnehmende Dichte aufweisen oder aber in dem die ringförmigen Weichstoffauflagen nach innen hin dicker ausgestaltet sind als nach außen, so dass beim Anziehen der Schrauben nur der innere Bereich stark komprimiert wird und dort seine Dichtwirkung entfaltet. Mit Hilfe eines neuentwickelten Spezialverfahrens zur Herstellung von Weichstoffauflagen aus Graphit ist es möglich, sowohl eine unterschiedlich dicke Weichstoffauflage kiebstofffrei aufzubringen als auch die Teile mit der höheren Graphitdicke mit einem Spezialwerkzeug vorzuverdichten. Auch so entsteht eine Weichstoffauflage, deren Gesamtstärke zwar gleich ist, aber eine unterschiedliche Verdichtung im Innen- und Außenbereich aufweist.

In den anliegenden Figuren 1 bis 9 wird die neue Dichtungsanordnung näher. erläutert.

Es zeigen:
**Fig.1** den rechten Teil einer erfindungsgemäßen Dichtungsanordnung im eingebauten Zustand im Querschnitt mit winkelförmigen Ringzähnen im radial äußeren und radial inneren Bereich der Aufnahmeflächen.
**Fig.2** den rechten Teil einer erfindungsgemäßen Dichtungsanordnung im eingebauten Zustand im Querschnitt mit winkelförmigen Ringzähnen, lediglich im radial inneren Bereich der Aufnahmeflächen.
**Fig.3** den rechten Teil einer erfindungsgemäßen Dichtungsanordnung im nicht eingebauten Zustand im Querschnitt mit winkelförmigen Ringzähnen im radial äußeren und im radial inneren Bereich der Aufnahmeflächen.
**Fig. 4** den rechten Teil einer erfindungsgemäßen Dichtungsanordnung im nicht eingebauten Zustand im Querschnitt mit winkelförmigen Ringzähnen, lediglich im radial inneren Bereich der Aufnahmeflächen.
**Fig. 5** den rechten Teil einer erfindungsgemäßen Dichtungsanordnung im nicht eingebauten Zustand im Querschnitt mit wellenförmigen Ringzähnen im radial inneren und äußeren Bereich der Aufnahmeflächen.
**Fig. 6** den rechten Teil einer erfindungsgemäßen Dichtungsanordnung im nicht eingebauten Zustand im Querschnitt mit wellenförmigen Ringzähnen, lediglich im radial inneren Bereich der Aufnahmeflächen.
**Fig. 7** den rechten Teil einer erfindungsgemäßen Dichtungsanordnung im Querschnitt mit beidseitig unterschiedlich dicken Weichstoffauflagestärken.
**Fig. 8** zeigt den rechten Teil einer erfindungsgemäßen Dichtungsanordnung im Querschnitt mit beidseitig gleicher Dicke der Weichstoffauflagen auf dem Metallkern unterschiedlicher Dichte.
**Fig. 9** zeigt vom rechten Teil einer erfindungsgemäßen Dichtungsanordnung gemäß Fig. 7 den Querschnitt der Dichtung im Einbauzustand zwischen zwei Flanschen mit hoher Endverdichtung innen und leichter Verdichtung außen.

In diesen Figuren bedeuten jeweils
- 1: den Teil eines Grundkörpers,.
- 2,3,4,5,6 und 9: Ringzähne
- 7, 7': Aufnahmeflächen für Weichstoffauflagen
- 8: eine Bördelung am Außenrand des Zentrierringes
- 11,12: Weichstoffauflagen
- 14,15: Teile eines Flansches
- 20: Teil einer Schraube

Bei den Figuren wird davon ausgegangen, daß die Dichtungsanordnung horizontal eingebaut ist. Deshalb wird vom rechten oder linken Teil der Dichtungsanordnung gesprochen. Selbstverständlich sind die Dichtungen in beliebiger Lage einbaubar. Sollten Sie lotrecht eingebaut sein, wäre vom oberen und unteren Teil zu sprechen. Da die Dichtungsanordnung rotationssymmetrisch ist, ist in den Figuren stets nur der rechte Teil im Querschnitt gezeigt.

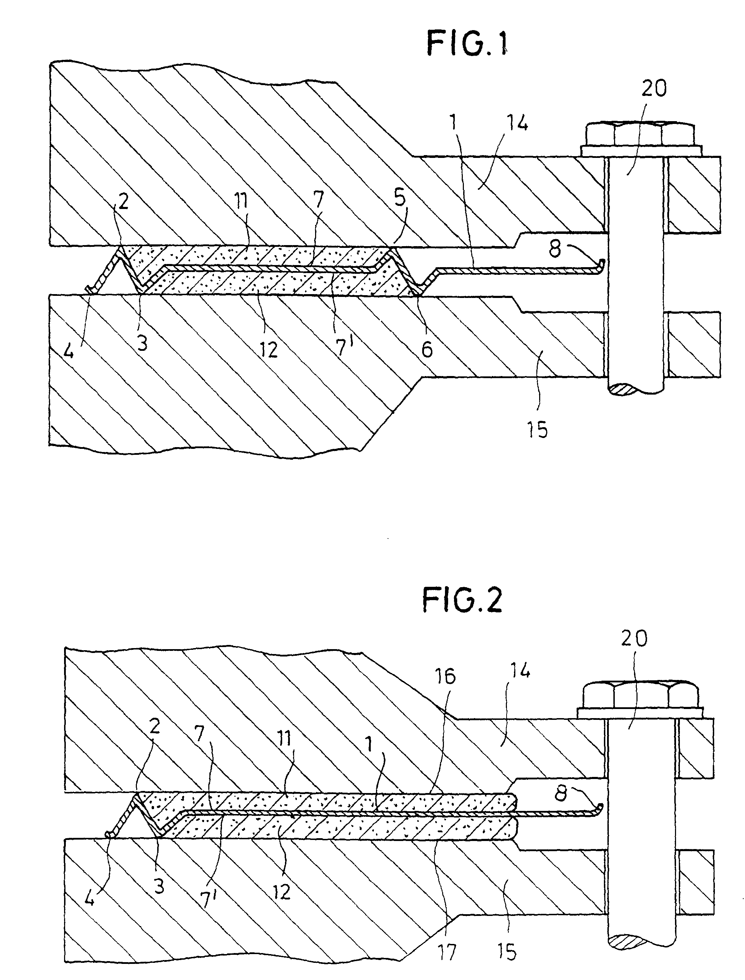

Figur 1 zeigt die Dichtungsanordnung in zwischen den Flanschen 14 und 15 eingebautem Zustand in stark vergrößertem Maßstab. Sie besteht aus einem Grundkörper 1 und zwei Weichstoffauflagen 11 und 12. Der Grundkörper ist vorzugsweise metallisch, die Weichstoffäuflagen bestehen insbesondere aus Graphit oder PTFE. Die Weichstoffauflagen sind auf den Aufnahmeflächen 7 und 7' aufgebracht und im allgemeinen aufgeklebt. Es ist aber auch eine kleberfreie Aufbringung möglich. Dabei ist wesentlich, dass die Aufnahmeflächen sich im wesentlichen gegenüber liegen und nur geringfügig radial versetzt sind.

Die zur Kammerung dienenden Ringzähne sind in diesem Fall vorzugsweise winkelförmig ausgebildet. Man kann in diesem Fall auch von einer Z-Form der Zähne sprechen, da sie sich im Querschnitt Z-förmig darstellen. Zur Kammerung der oberen Weichstoffauflage 11 ist im radial außenliegenden Bereich (Abdichtung gegenüber der Atmosphäre) der Ringzahn mit dem Anlagepunkt 5 und im radial innenliegenden Bereich (Abdichtung gegenüber dem Medium) der Ringzahn mit dem Anlagepunkt 2 vorgesehen.

Die untere Weichstoffauflage 12 ist durch die Ringzähne mit den Anlagepunkten 6 und 3 gekammert. Zur Erhöhung der Festigkeit des Ringzahns mit dem Anlagepunkt 2 im inneren Bereich ist der Grundkörper nach dem Anlagepunkt 2 bis zu dem gegenüberliegenden Flansch 15 geführt und liegt dort nochmals mit dem Anlagepunkt 4 am Flansch an. Somit ist der obere Flansch 14 von innen nach außen über den Anlagepunkt 2, die Weichstoffauflage 11 und den Anlagepunkt 5, dreifach abgedichtet. Der untere Flansch 15 ist über die Anlagepunkt 4 und 3, die Weichstoffauflage 12 und den Anlagepunkt 6 insgesamt sogar vierfach abgedichtet. Diese Ausgestaltung schützen die Weichstoffauflagen nicht nur gegen die Flüssigkeiten oder Gase im Inneren der Rohrleitungen, sondern auch gegen den Angriff der Atmosphäre von außen. Diese Ausgestaltung ist deshalb vor allen Dingen für höhere Temperaturen geeignet. Der Grundkörper verläuft im Bereich der einander gegenüberliegenden Aufnahmeflächen 7, 7', vorzugsweise mittig zwischen den beiden Flanschen, wobei die Anlagepunkte 2 und 5 von der Ebene der oberen Aufnahmefläche 7 etwa den gleichen Abstand haben wie die Anlagepunkte 4,3 und 6 von der unteren Aufnahmefläche 7'.

An den äußeren Ringzahn 6 schließt sich ein Zentrierring an, der aus einer weiteren Ringfläche des Grundkörpers gebildet wird. Der Außendurchmesser des Zentrierrings ist nur geringfügig kleiner als der Durchmesser des gedachten Kreises, den die Schrauben 20 innen berühren würden. Damit läßt sich die Dichtungsanordnung leicht zentrieren, sobald einige der Schrauben durch die Fianschbohrungen gesteckt sind. Beim Drehen der Schrauben und bei einem etwaigen Eingreifen des äußeren Randes des Zentrierrings in die Gewindegänge könnte der Grundkörper verzogen werden. Um dies zu verhindern und auch die Schrauben zu schonen, ist es im allgemeinen vorgesehen, am Außenrand des Zentrierrings eine Umbördelung 8 anzubringen.

Bei der Dichtungsanordnung gemäß Figur 2 sind nur im inneren Bereich Ringzähne mit den Anlagepunkten 4,2 und 3 vorgesehen, nicht hingegen im äußeren Bereich. Damit deckt die obere Weichstoffauflage 11 den oberen Flansch 14 entlang der Flanschleiste ab. Für die untere Weichstoffauflage 12 gilt dies - analog bis zum Ende der dichtenden Flanschfläche. Diese Ausgestaltung kommt vor allem zur Anwendung für Dichtungen im normalen oder in niedrigen Temperaturbereichen, bei dem die Weichstoffauflagen noch nicht von der Atmosphäre angegriffen werden.

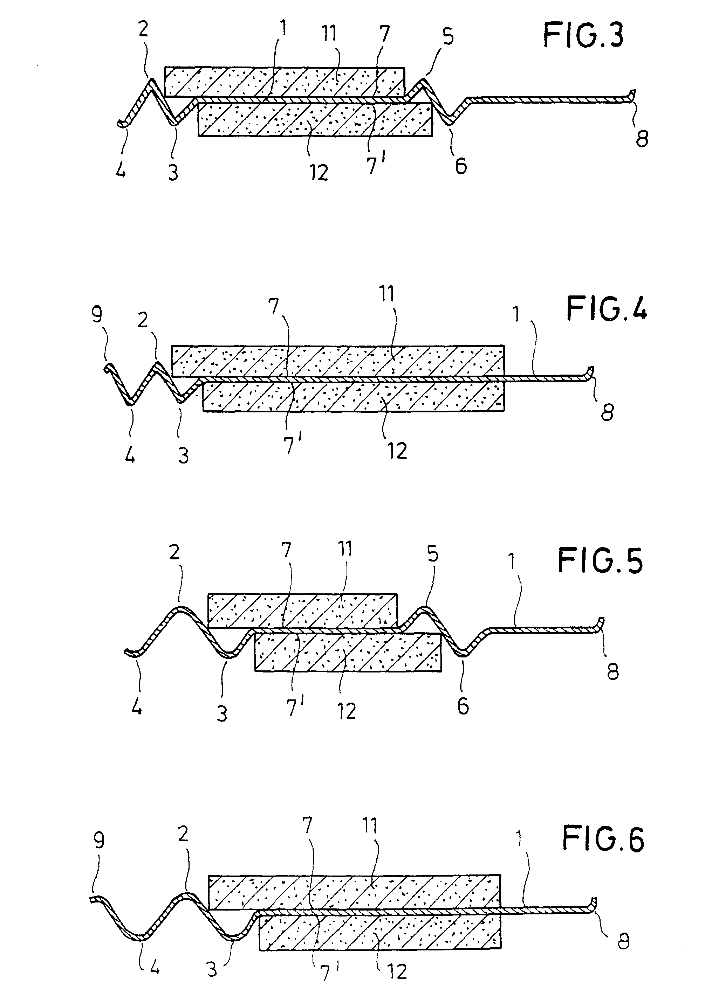

Figur 3 zeigt die Dichtungsanordnung der Figur 1 mit winkelförmigen Zähnen im nicht eingebautem Zustand. Die obere Ebene der oberen Weichstoffauflage 11 liegt oberhalb der Oberkante der beiden Ringzähne mit den Anlagepunkten 2 und 5. Die untere Ebene der unteren Weichstoffauflage 12 liegt unterhalb der Unterkante der unteren Ringzähne mit den Anlagepunkten 4,3 und 6. Erst im eingebauten Zustand ergibt sich durch das Zusammendrücken der Weichstoffauflagen im Bereich der Komprimierbarkeit eine einheitliche obere Anlagefläche am oberen Flansch und eine einheitliche untere Anlagefläche am unteren Flansch. Die Dicke der Weichstoffauflage, ihre Zusammenpreßbarkeit und die Höhe der Ringzähne sind vorzugsweise so aufeinander abgestimmt, daß im eingebauten Zustand die Ringzähne und die Weichstoffauflagen an den Flanschdichtleisten im Hinblick auf eine optimale Abdichtung anliegen. Der amhäufigsten verwendete Graphit mit einer Dichte von 1,0 g/cm³ kann beispielsweise maximal um 53 % komprimiert werden.

Figur 4 zeigt die Dichtungsanordnung nach Figur 2 im nicht eingebauten Zustand. Auch hier überragt die oberste und die unterste Anlagefläche der Weichstoffauflagen die Anlagepunkt der jeweiligen Ringzähne. Die Dichtungsanordnung nach Figur 5 entspricht im wesentlichen derjenigen nach Figur 1. Die zur Kammerung der Weichstoffauflagen dienenden Zähne sind aber nicht winkelförmig sondern wellenförmig ausgebildet. Dadurch liegen die Zähne mit ihren Anlagepunkten 2,3,4,5 und 6 etwas großflächiger an den Flanschen an als dies in Figur 1 bei den winkelförmigen Zähnen der Fall ist. Durch die Federcharakteristik des Metallkems kommt es dennoch zu einer guten Dichtung bei maßvollem Anpreßdruck.

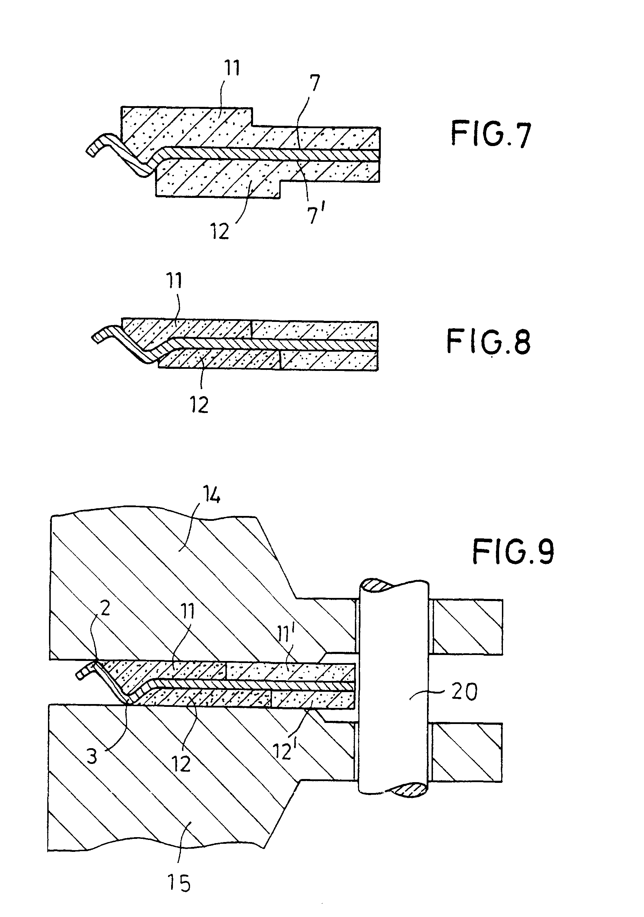

Die Dichtungsanordnung nach Figur 6 entspricht im wesentlichen derjenigen nach Figur 2, sie besitzt allerdings wellenförmige Zähne. Die Dichtungsanordnung in Figur 7 zeigt Auflagen mit unterschiedlichen Stärken im Innen- und im Außenbereich. Die Dichtungsanordnung in Figur 8 zeigt Weichstoffauflagen mit gleichbleibender Stärke, jedoch unterschiedlicher Dichte im Innen- und im Außenbereich. Figur 9 zeigt die Dichtungsanordnungen nach Figur 7 und 8 im eingebauten Zustand. Sie weisen beide unterschiedliche Flächenpressung im Innen- und im Außenbereich auf. Dabei dient der Innenbereich der Dichtung der Abdichtung zum Medium und der Außenbereich dem Korrosionsschutz für die Flanschflächen.

Eine unterschiedliche Graphitdicke oder eine unterschiedliche Graphitdichte läßt sich beispielsweise mit Hilfe eines neuentwickelten Verfahrens an einer dafür entwickelten Vorrichtung aufbringen, wobei sogar auf die Verwendung eines Klebers auf dem metallischen Grundkörper verzichtet werden kann. Auf alle Fälle erhält man so beste Abdichtung durch hohe Anpresskräfte im inneren Bereich und ausreichenden Korrosionsschutz für die Fianschflächen im äußeren Bereich. Da die erfindungsgemäßen Dichtungen im allgemeinen im Außenbereich oder zumindest im Bereich des Zentrierringes nicht mit Weichstoffauflage abgedeckt sind, können hier Kennzeichnungen, Markierungen etc. dauerhaft eingestanzt oder eingedrückt werden, wodurch später auch eine Kontrolle möglich ist, ob an der Stelle die richtige und für diesen Zweck vorgeschriebene Dichtung zum Einsatz gekommen ist. Diese Markierung kann darüber hinaus den Hersteller auch später identifizieren.

Anstelle des Zentrierringes ist es natürlich auch möglich, die neue Dichtungsanordnung mit sogenannten Variosegmenten gemäß WO 97/49939 auszustatten, die ebenfalls eine leichte und zuverlässige Zentrierung gestatten. Da die erfindungsgemäße Dichtungsanordnung so preiswert wie möglich sein soll, ist die Anbringung eines Zentrierringes mit Bördelung die einfachste und preiswerteste Ausgestaltung.

## Patentansprüche

1. Dichtungsanordnung für eine flache Flanschverbindung mit einem vorzugsweise metallischen Grundkörper (1), der auf jeder seiner beiden Seiten Aufnahmeflächen (7,7') für ringförmige Weichstoffauflagen (11,12) aufweist, wobei die Aufnahmeflächen (7,7') in einem großen Bereich eben sind und im wesentlichen unmittelbar einander gegenüberliegen, mit mindestens je einem Ringzahn (2,3) im radial innenliegenden Bereich jeder Aufnahmefläche und vorzugsweise auch mindestens je einem Ringzahn (5,6) im radial außenliegenden Bereich jeder Aufnahmefläche, wobei die Weichstoffauflagen jeweils auf den Aufnahmeflächen (7,7') befestigt sind und wobei im eingebauten Zustand die Ringzähne an den Flanschflächen (14,15) zur Anlage kommen und die Weichstoffauflagen (11,12) zumindestens nach innen hin durch die Ringzähne (2,3) begrenzt sind, **dadurch gekennzeichnet, dass** die Wandung des Grundkörpers (1) eine geringe Dicke von nur 0,2 bis 2,00 mm, vorzugsweise 0,3 bis 1,2 mm aufweist, die Ringzähne durch Prägen derart ausgebildet sind, dass die gesamte Wandung winkelförmig oder wellenförmig verläuft und eine punktuelle, metallische Berührung mit den Flanschflächen (14,15) ermöglicht wird und dass die Weichstoffauflagen (10,12) auf dem metallischen Grundkörper (1) so berechnet sind, dass sie im eingebauten Zustand nahezu maximal verdichtet sind, wobei die geprägten Innenzähne und die gegebenenfalls vorhandenen Außenzähne eine Federcharakteristik aufweisen, welche so gewählt ist, dass nach dem Ausbau der Dichtung aus dem Flansch die Zahnhöhen in den Zustand wie vor dem Einbau zurückentspannen können und damit die ursprüngliche Zahnhöhe zurückerlangt wird.

2. Dichtungsanordnung nach Anspruch 1, **dadurch gekennzeichnet, dass** der Grundkörper (1) im Anschluss an den Anlagepunkt des Ringzahnes (2) im radial innenliegenden Bereich nach innen weitergeführt ist bis zu einem weiteren Anlagepunkt (4), der im eingebauten Zustand an der ihm gegenüberliegenden Flanschfläche (15) zur Anlage kommt.

3. Dichtungsanordnung nach einem der Ansprüche 1 oder 2, **dadurch gekennzeichnet, dass** der Grundkörper (1) im Bereich seiner Aufnahmeflächen (7,7') im eingebauten Zustand mittig zwischen den Flanschflächen (14,15) angeordnet ist.

4. Dichtungsanordnung nach Anspruch 1, **dadurch gekennzeichnet, dass** nur in dem inneren, dem Medium zugewandten Bereich Ringzähne (2,3) angeordnet sind, nicht dagegen im äußeren Bereich und dass die Weichstoffauflagen (11,12) im eingebauten Zustand im wesentlichen die gesamte äußere dichtende Flanschfläche abdecken.

5. Dichtungsanordnung nach einem der Ansprüche 1 bis 3, **dadurch gekennzeichnet, dass** die Dicke der Weichstoffauflagen (11,12), ihre Zusammepressbarkeit und die Höhe der Ringzähne so aufeinander abgestimmt sind, dass sich im eingebauten Zustand auf beiden Seiten die optimale Abdichtung ergibt durch die Innenzähne (2,3), die Weichstoffauflagen (11,12) und gegebenenfalls die Außenzähne (5,6).

6. Dichtungsanordnung nach einem der Ansprüche 1 bis 5, **dadurch gekennzeichnet, dass** der Grundkörper (1) einen äußeren Zentrierring aufweist mit einem Außendurchmesser, der geringfügig geringer ist, als der gedachte Kreis, der die Flanschschrauben (20) innen berühren würde.

7. Dichtungsanordnung nach Anspruch 6, **dadurch gekennzeichnet, dass** sie an ihrem Außenumfang eine Bördelung (8) aufweist, deren Außendurchmesser nur geringfügig geringer ist als der gedachte Kreis, der die Flanschschrauben innen berühren würde.

8. Dichtungsanordnung nach einem der Ansprüche 1 bis 7, **dadurch gekennzeichnet, dass** die ringförmigen Weichstoffauflagen (11,12) nach innen hin dicker ausgestaltet sind als nach außen.

9. Dichtungsanordnung nach einem der Ansprüche 1 bis 7, **dadurch gekennzeichnet, dass** die Weichstoffauflagen (11,12) bei gleichbleibender Dicke über den gesamten Bereich der Dichtung von innen bis zum Außendurchmesser eine abnehmende Dichte aufweisen.

10. Dichtungsanordnung nach einem der Ansprüche 8 bis 10, **dadurch gekennzeichnet, dass** die unterschiedlich dicken Weichstoffauflagen klebstofffrei mit einem Spezialwerkzeug auf die Aufnahmeflächen (7,7') aufgebracht sind.

11. Dichtungsanordnung nach einem der Ansprüche 8 bis 10, **dadurch gekennzeichnet, dass** die Teile mit der höheren Dicke der Weichstoffauflage mit einem weiteren Spezialwerkzeug vorverdichtet sind.

12. Dichtungsanordnung gemäss Anspruch 11, **dadurch gekennzeichnet, dass** die Gesamtstärke der Weichstoffauflage gleich ist bei unterschiedlicher Verdichtung vom Innen- zum Außendurchmesser hin.

13. Dichtungsanordnung nach einem der Ansprüche 1 bis 12, **dadurch gekennzeichnet, dass** die Weichstoffauflage Graphit ist.

## Claims

1. A sealing arrangement for a flat flanged joint comprising a preferably metallic base body (1) having bearing surfaces (7, 7') on each of its two sides for ring-shaped supports (11, 12) made of a soft material, the bearing surfaces (7, 7') being flat over a large area and being situated essentially directly opposite to each other, at least one ring tooth (2, 3) being provided in the inner radial area of each bearing surface and preferably at least one ring tooth (5, 6) being also provided in the outer radial area of each bearing surface, said soft material supports each being fixed on the bearing surfaces (7, 7'), the ring teeth, when the arrangement is assembled, coming to rest on the flange surfaces (14, 15), and the soft material supports (11, 12) being at least inwardly limited by the ring teeth (2, 3), **characterized in that** the wall of the base body (1) has a low thickness of only 0.2 to 2.0 mm, preferably 0.3 to 1.2 mm, and the ring teeth are shaped by stamping in such a way that the whole wall has an angular or wave-shape configuration, and a punctual metallic contact with the flange surfaces (14, 15) is enabled, and that said soft material supports (10, 12) on the metallic base body (1) are calculated to be at almost maximum compaction in the mounted state, wherein the stamped inner teeth and the outer teeth, which are also present, have spring properties which are selected such that, after demounting the seal from the flange, the depth of teeth can restore to the state as before the mounting and thus the original depth of teeth is recovered.

2. The sealing arrangement according to claim 1, **characterized in that** said base body (1) is stretched further inwards in the inner radial area after the contact point of the ring tooth (2) up to a further contact point (4) which, in the mounted state, comes to rest on the opposing flange surface (15).

3. The sealing arrangement according to any of claims 1 or 2, **characterized in that** said base body (1) stretches midway between the flange surfaces (14, 15) in the area of its bearing surfaces (7, 7') in the mounted state.

4. The sealing arrangement according to claim 1, **characterized in that** ring teeth (2, 3) are provided only in the inner zone facing the medium, but not in the outer zone, and that the soft material supports (11, 12) substantially cover the whole outer sealing flange surface in the mounted state.

5. The sealing arrangement according to any of claims 1 to 3, **characterized in that** the thickness of the soft material supports (11, 12), their compressibility and the depth of the ring teeth are matched to one another in such a way that an optimum triple sealing results in the mounted state on both sides through the inner teeth (2, 3), the outer teeth (5, 6) and the soft material supports (11, 12).

6. The sealing arrangement according to any of claims 1 to 5, **characterized in that** said base body (1) has a centering ring subsequent to the outermost ring tooth (6) which centering ring has an outer diameter which is slightly smaller than the imaginary circle which would contact the flange screws (20) on the inside.

7. The sealing arrangement according to claim 6, **characterized by** having a bead (8) on its outer perimeter the outer diameter of which is but slightly smaller than the imaginary circle which would contact the flange screws on the inside.

8. The sealing arrangement according to any of claims 1 to 7, **characterized in that** said ring-shaped soft material supports (11, 12) have a thicker design towards the inside than towards the outside.

9. The sealing arrangement according to any of claims 1 to 7, **characterized in that** said soft material supports (11, 12) have a density which decreases from inside to the outer diameter throughout the area of the seal while the thickness is uniform.

10. The sealing arrangement according to any of claims 8 to 10, **characterized in that** said soft material supports of varying thickness are applied to the bearing surfaces (7, 7') without an adhesive and using a special tool.

11. The sealing arrangement according to any of claims 8 to 10, **characterized in that** those portions of the soft material support having a higher thickness have been precompacted with another special tool.

12. The sealing arrangement according to claim 11, **characterized in that** the total thickness of the soft material support is uniform while the compaction varies from the inner to the outer diameter.

13. The sealing arrangement according to any of claims 1 to 12, **characterized in that** said soft material support is graphite.

## Revendications

1. Dispositif d'étanchéité pour un raccord à brides plat avec un corps de base (1) de préférence métallique qui présente sur chacune de ses deux faces des surfaces de réception (7, 7') pour des pièces annulaires de support en matériau tendre (11,12), ces surfaces de réception (7, 7') étant planes sur une grande étendue et se faisant essentiellement face directement, avec au moins une dent annulaire (2, 3) dans la zone radialement intérieure de chaque surface de réception et de préférence aussi au moins une dent annulaire (5, 6) dans la zone radialement extérieure de chaque surface de réception, les pièces de support en matière tendre étant fixées chaque fois sur les surfaces de réception (7, 7') et, à l'état monté, les dents annulaires étant en contact avec les surfaces des brides (14, 15) et les pièces de support en matière tendre (11, 12) étant limitées au moins vers l'intérieur par les dents annulaires (2, 3), **caractérisé en ce que** la paroi du corps de base (1 ) possède une épaisseur faible de 0,2 à 2,00 mm, de préférence de 0,3 à 1,2 mm, les dents annulaires sont formées par emboutissage de telle manière que l'ensemble de la paroi a un profil angulaire ou ondulé et permet un contact métallique ponctuel avec les surfaces des brides (14,15), et que les pièces de support en matière tendre (10,12) sont calculées par rapport au corps métallique de base (1) de telle manière qu'elles sont presque comprimées presque au maximum à l'état monté, les dents intérieures embouties et les dents extérieures éventuellement présentes offrant une élasticité, laquelle est choisie de telle sorte qu'après le démontage du joint de la bride, les dents peuvent se détendre pour reprendre la même hauteur qu'avant le montage et que la hauteur initiale des dents est ainsi retrouvée.

2. Dispositif d'étanchéité selon la revendication 1, **caractérisé en ce que** le corps de base (1), à partir du point de contact de la dent annulaire (2) dans la zone radialement intérieure, se prolonge vers l'intérieur jusqu'à un autre point de contact (4) qui, à l'état monté, entre en contact avec la surface de bride (15) qui lui fait face.

3. Dispositif d'étanchéité selon l'une des revendications 1 ou 2, **caractérisé en ce que** le corps de base (1) est disposé, à l'état monté, dans la zone de ses surfaces de réception (7, 7'), au milieu entre les surfaces des brides (14,15).

4. Dispositif d'étanchéité selon la revendication 1, **caractérisé en ce que** des dents annulaires (2, 3) sont disposées uniquement dans la zone intérieure orientée vers le fluide, et non dans la zone extérieure, et qu'à l'état monté, les pièces de support en matière tendre (11,12) recouvrent sensiblement la totalité de la surface d'étanchéité extérieure des brides.

5. Dispositif d'étanchéité selon l'une des revendications 1 à 3, **caractérisé en ce que** l'épaisseur des pièces de support en matière tendre (11, 12), leur compressibilité d'ensemble et la hauteur des dents annulaires sont ajustées l'une par rapport à l'autre de telle manière qu'à l'état monté, une étanchéité optimale est offerte des deux côtés par les dents intérieures (2, 3), les pièces de support en matière tendre (11, 12) et le cas échéant les dents extérieures (5, 6).

6. Dispositif d'étanchéité selon l'une des revendications 1 à 5, **caractérisé en ce que** le corps de base (1) présente une couronne de centrage externe dotée d'un diamètre extérieur qui est légèrement plus petit que le cercle imaginaire qui toucherait à l'intérieur les vis des brides (20).

7. Dispositif d'étanchéité selon la revendication 6, **caractérisé en ce qu'**elle possède à sa périphérie un rebord (8) dont le diamètre extérieur est légèrement plus petit que le cercle imaginaire qui toucherait à l'intérieur les vis des brides.

8. Dispositif d'étanchéité selon l'une des revendications 1 à 7, **caractérisé en ce que** les pièces de support annulaires en matière tendre (11, 12) sont plus épaisses vers l'intérieur que vers l'extérieur.

9. Dispositif d'étanchéité selon l'une des revendications 1 à 7, **caractérisé en ce que** les pièces de support en matière tendre (11, 12), avec une épaisseur constante sur toute la surface du joint, présentent une compression décroissante de l'intérieur vers le diamètre extérieur.

10. Dispositif d'étanchéité selon l'une des revendications 8 à 10, **caractérisé en ce que** les pièces de support en matière tendre (11, 12) d'épaisseur variable sont montées sans colle avec un outil spécial sur les surfaces de réception (7, 7').

11. Dispositif d'étanchéité selon l'une des revendications 8 à 10, **caractérisé en ce que** les parties de la pièce de support en matière tendre dotées de la plus grande épaisseur sont pré-comprimées avec un autre outil spécial.

12. Dispositif d'étanchéité selon la revendication 11, **caractérisé en ce que** l'épaisseur totale de la pièce de support en matière tendre est constante avec une compression variant du diamètre intérieur vers le diamètre extérieur.

13. Dispositif d'étanchéité selon l'une des revendications 1 à 12, **caractérisé en ce que** la pièce de support en matière tendre est en graphite.
